(19) Europäisches Patentamt
European Patent Office
Office européen des brevets

(11) **EP 3 916 641 A1**

(12) **EUROPEAN PATENT APPLICATION**

(43) Date of publication:
01.12.2021 Bulletin 2021/48

(21) Application number: 21174801.7

(22) Date of filing: 19.05.2021

(51) Int Cl.:
**G06N 3/04** (2006.01)  **G06N 3/08** (2006.01)
**G06N 5/02** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2020 US 202016884752**

(71) Applicant: **Babylon Partners Limited**
**London SW3 3DD (GB)**

(72) Inventors:
• ENGUEHARD, Joseph Henri Theodore
London, SW3 3DD (GB)
• BUSBRIDGE, Daniel William
London, SW3 3DD (GB)
• BOZSON, Adam
London, SW3 3DD (GB)

(74) Representative: **Jefferies, Matthew Thomas et al**
**Marks & Clerk LLP**
**15 Fetter Lane**
**London EC4A 1BW (GB)**

(54) **CONTINUOUS TIME SELF ATTENTION FOR IMPROVED COMPUTATIONAL PREDICTIONS**

(57) Embodiments described herein allow predictions to be made for any continuous position by making use of a continuous position embedding based on previous observations. An encoder-decoder structure is described herein that allows effective predictions for any position without requiring predictions for intervening positions to be determined. This provides improvements in computational efficiency. Specific embodiments can be applied to predicting the number of events that are expected to occur at or by a given time. Embodiments can be adapted to make predict based on electronic health records, for instance, determining the likelihood of a particular health event occurring by a particular time.

Figure 4

**Description**

TECHNICAL FIELD

The present disclosure relates to methods and systems for determining one or more predicted observations based on observations. In particular, but without limitation, this disclosure relates to computer implemented methods and systems for predicting future events at arbitrary time-points using continuous time embeddings. This is particularly useful for predicting events based on a history of events, such as predicting future medical events based on a medical history of a patient.

BACKGROUND

This specification relates to neural network systems and, in particular, systems for generating predictions of one or more observations based on past observations. For instance, it can be useful to be able to predict the likelihood of a particular medical condition or health event occurring in the future based on a previous history of medical conditions or health events. This can allow high-risk patients to be identified and appropriate preventative action to be taken.

Having said this, many current machine learning systems (such as recurrent neural networks or transformer neural networks) are unable to model time continuously. This makes it difficult to predict the likelihood of events at arbitrary times. Instead, many systems assume that their inputs are synchronous; that is, that the inputs have regular time intervals. Predictions using these systems are only then possible for discrete time-points (i.e. based on the position of the observation with a sequence of observations). Moreover, these systems struggle when provided with asynchronous observations (observations sampled at different, irregular points in time). This is problematic, particularly when it comes to attempting to make predictions based on medical history, as this tends to include asynchronous data (i.e. health events do not tent to occur at regular intervals).

Furthermore, as predictions can only be made in discrete time-steps, it is not possible to make a direct prediction for a selected point in time, as instead each intervening time-step needs to be processed.

Some systems model time using specifically trained (problem-specific) neural networks, but these neural networks are unable to be applied generally. Accordingly, these systems fail when applied to different problems. In addition, specifically training such systems can be difficult and computationally expensive.

SUMMARY

Embodiments described herein allow predictions to be made for any continuous position by making use of a continuous position embedding based on previous observations. An encoder-decoder structure is described herein that allows effective predictions for any position without requiring predictions for intervening positions to be determined. This provides improvements in computational efficiency. Specific embodiments can be applied to predicting the number of events that are expected to occur at or by a given time. Embodiments can be adapted to make predictions based on electronic health records, for instance, determining the likelihood of a particular health event occurring by a particular time.

According to an aspect there is provided a computer implemented method comprising: obtaining a set of observations and a set of corresponding position values for the observations; embedding the set of position values to form a set of embedded position values using a first continuous position embedding; encoding each observation using its corresponding embedded position value to form a set of encoded observations; encoding the set of encoded observations using an encoder neural network to produce a set of encoded representations; obtaining a query indicating a position for a prediction; embedding the query to form an embedded query using a second continuous position embedding; decoding the encoded representations using a decoder neural network conditioned on the embedded query to determine an expected number of instances of the predicted observation occurring at a position indicated by the query given the set of observations.

The set of observations may be any set of observations that are in a sequence, where the position of each observation within the sequence is given by the corresponding position value. The position values need not be discrete, and can be continuous values along a given continuous dimension. For instance, the position value may be a time value indicative of a corresponding time for the observation.

The first and second continuous position embeddings may be the same (of the same form) or may differ. By implementing continuous position embeddings, predictions for any general position can be made based on asynchronous observations. This reduces the computational burden required to make such predictions (e.g. by avoiding having to make predictions for each intervening position).

According to an embodiment, each observation is an observed event and each position is a time value for the corresponding observed event, encoding each observation using its corresponding embedded position value forms a set of temporal encoded observations, the predicted observation is a predicted event and the position indicated by the query is a time for the predicted event.

Observed events may be embedded observations that are either received or determined by the method from raw observations (raw observed events). Observed events may relate to a single label or multiple labels. Where there is a single label, each observed event can represent one observation. Where multiple labels are present, each observed event can represent multiple different types of observations (e.g. one type of observation per label).

According to an embodiment, the encoder neural network and decoder neural network model the expected number of instances of the predicted observation occurring at the position indicated by the query as a temporal point process such that the decoder neural network determines a conditional intensity indicative of the expected number of instances of the predicted observation occurring at the position indicated by the query.

According to an embodiment the conditional intensity comprises one of an instantaneous conditional intensity representing the expected number of instances of the predicted observation occurring specifically at the position indicated by the query, or a cumulative conditional intensity representing the expected number of instances of the predicted observation occurring over a range ending at the position indicated by the query.

The conditional intensity may represent the number of instances just at that position indicated by the query (e.g. over an infinitesimal range between $x$ and $x + dx$, where $x$ is the position indicated by the query) or a cumulative intensity over a longer range (e.g. since the last observation in the set of observations). The range may begin at a position of a last observation in the set of observations. The cumulative conditional intensity can be directly modelled or can be obtained by summing or integrating the instantaneous conditional intensity over the range.

The conditional intensity may be utilised to determine a probability of the predicted observation occurring at the position indicated by the query. The method may further include outputting an indication of the conditional intensity, the number of instances of the predicted observation occurring at the position indicated by the query or the probability. A threshold can be applied to any of these values and an alert or command may be issued based on the respective value either being greater than or less than the threshold (depending on the task at hand). For instance, where a probability of a medical event occurring is being determined, an alert may be issued in response to the probability exceeding a threshold. Alternatively, patients for which the associated prediction (e.g. probability, predicted number of events, intensity) fall outside of a given range may be flagged and/or clustered together based on their particular attributes (e.g. high risk of an event occurring over a set period of time).

According to an embodiment, the conditional intensity is a cumulative conditional intensity and the second continuous position embedding is monotonic over position. This ensures that the cumulative conditional intensity can be effectively calculated by the decoder. In this case, the first continuous position embedding (for the encoder) need not be monotonic over position (but may be). This is because the position values input into the encoder are independent of the query position and therefore do not affect the derivative of the whole approximated function implemented method.

According to an embodiment, the decoder neural network makes use of one or more of a sigmoid activation function, an adaptive Gumbel activation function or a tanh activation function when decoding the encoded representations.

According to a further embodiment, the decoder neural network makes use of an activation function formed from a combination of an adaptive Gumbel activation function and a softplus activation function when decoding the encoded representations.

According to an embodiment, each of the first and second continuous position embeddings is a continuous mapping that maps position values onto a continuous space in which positions within the space are related by a linear transformation depending on difference between the positions.

One or both of continuous position embeddings may comprise one or more trigonometric functions. One or both of the continuous position embeddings may comprise a trigonometric function for each dimension of the embedded position value, wherein each trigonometric function differs from all other trigonometric functions in the continuous position embedding. One or both of the continuous position embeddings may comprise a set of sine functions and a set of cosine functions, wherein each sine function has a unique angular frequency in the set of sine functions and each cosine function has a unique angular frequency in the set of cosine functions. Whilst angular frequency is unique in sines and unique in cosines, they may be shared across the sets (e.g. a series of pairs of sines and cosines with matching angular frequencies).

According to one embodiment, the linear transformation is a rotation.

According to an embodiment, one or both of the first and second continuous position embeddings is implemented through a corresponding encoder neural network. The encoder neural network may be a multi-layer perceptron.

According to an embodiment, one or both of the first and second continuous position embeddings is

$$Emb(x) = \bigoplus_{k=0}^{\frac{d_{\text{Model}}}{2}-1} \sin(\alpha_k x) \oplus \cos(\alpha_k x) \in \mathbb{R}^{d_{\text{Model}}}$$

where: $x$ represents a position value; **Emb**($x$) represents an embedded position value for the position value;

$$\bigoplus\limits_{k=0}^{\frac{d_{\mathrm{Model}}}{2}-1}$$

represents a concatenation from $i = 0$ to $i = \dfrac{d_{\mathrm{Model}}}{2} - 1$; $d_{\mathrm{Model}}$ represents the dimension of the embedded position value; and $\alpha_k$ is a constant of a set of constants $[\alpha_k]_{k=0}^{\frac{d}{2}-1}$.

In one embodiment, $\alpha_k = \beta \times c^{-2k/d_{\mathrm{Model}}}$, where $\beta$ is a rescaling parameter and $c$ is a predefined constant (e.g. $c = 1000$).

According to an embodiment, the encoder neural network and the decoder neural network make use of attention.

According to an embodiment, the decoder neural network implements an attention mechanism that makes use of an attention query formed from the embedded query and keys and values formed from the set of encoded representations.

Keys and values may be linear projections of the set of encoded representations. The keys and values may be equal to the elements of the set of encoded representations passed through a dense layer of the decoder neural network. The attention query may be a projection of the embedded query or may be equal to the embedded query itself.

According to an embodiment, the attention mechanism produces an attention vector based on the attention query, keys and values, which is input into a neural network to decode the encoded representations.

According to an embodiment, updating parameters for one or more of the encoder neural network and the decoder neural network based on a loss function calculated based on the predicted observation and a training observation.

According to a further aspect there is provided a computing system comprising one or more processors configured to: obtain a set of observations and a set of corresponding position values for the observations; embed the set of position values to form a set of embedded position values using a first continuous position embedding; encode each observation using its corresponding embedded position value to form a set of encoded observations; encode the set of encoded observations using an encoder neural network to produce a set of encoded representations; obtain a query indicating a position for a prediction; embed the query to form an embedded query using a second continuous position embedding; and decode the encoded representations using a decoder neural network conditioned on the embedded query to determine an expected number of instances of the predicted observation occurring at a position indicated by the query given the set of observations.

According to a further aspect there is provided a non-transitory computer readable medium comprising executable code that, when executed by a processor, causes the processor to perform a method comprising: obtaining a set of observations and a set of corresponding position values for the observations; embedding the set of position values to form a set of embedded position values using a first continuous position embedding; encoding each observation using its corresponding embedded position value to form a set of encoded observations; encoding the set of encoded observations using an encoder neural network to produce a set of encoded representations; obtaining a query indicating a position for a prediction; embedding the query to form an embedded query using a second continuous position embedding; and decoding the encoded representations using a decoder neural network conditioned on the embedded query to determine an expected number of instances of the predicted observation occurring at a position indicated by the query given the set of observations.

BRIEF DESCRIPTION OF THE DRAWINGS

Arrangements of the present invention will be understood and appreciated more fully from the following detailed description, made by way of example only and taken in conjunction with drawings in which:

Figure 1 shows a block diagram of a diagnostic system;

Figure 2 shows a computer for implementing the diagnostic system from Figure 1;

Figure 3 shows an encoder-decoder structure for modelling a neural temporal point process according to an embodiment;

Figure 4 shows an example of an encoder-decoder transformer architecture according to an embodiment; and

Figure 5 shows a method for determining the probabilities of events at a certain time based on an input set of events according to an embodiment.

DETAILED DESCRIPTION

It is an object of the present disclosure to improve on the prior art. In particular, the present disclosure addresses one or more technical problems tied to computer technology and arising in the realm of computer networks, in particular the technical problems of memory usage, and processing speed. The disclosed methods solve this technical problem using a technical solution, namely by applying a continuous embedding function to encode time values for observations, predictions can be made based on asynchronous data. Furthermore, by utilising embedded time values in a decoder, the predictions can be made for any, arbitrary time point. This avoids the need to process each intervening time point, such as in recurrent neural networks. Accordingly, a prediction for a specific point in time can be made more efficiently, by avoiding the processing of intervening time points. Specific embodiments model the probability of an event occurring as a temporal point process. This methodology is particularly well suited for modelling not only the probability that an event will occur at a given time, but also the cumulative probability that it will occur over a period of time.

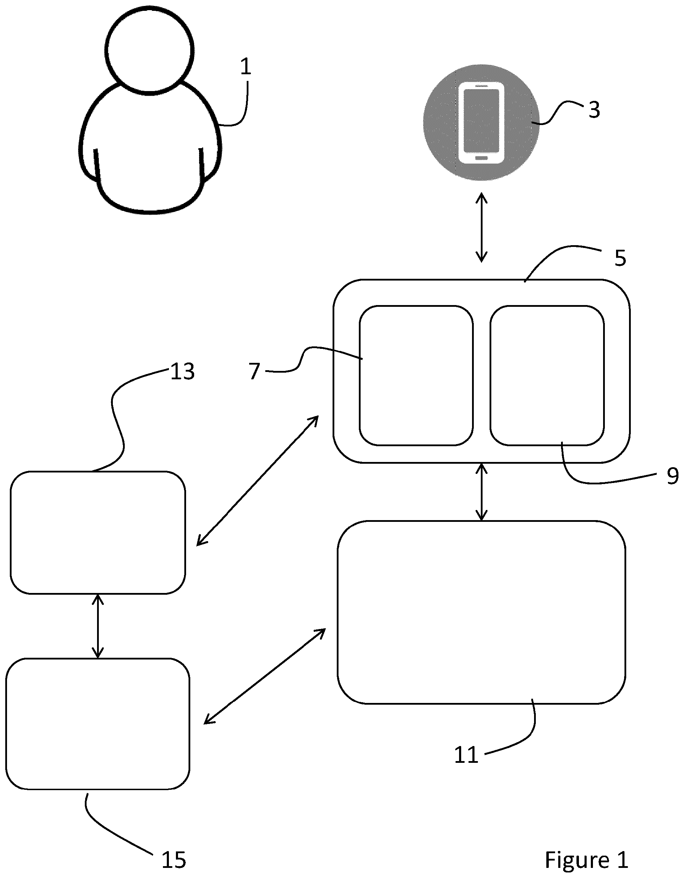

Figure 1 shows a block diagram of a diagnostic system. A user 1 communicates to a diagnostic system via a mobile phone 3. However, any device could be used which is capable of communicating information over a computer network, for example, a laptop, tablet computer, information point, fixed computer, voice assistant, etc.

The mobile phone 3 will communicate with interface 5. Interface 5 has two primary functions, the first function 7 is to take the words uttered by the user and turn them into a form that can be understood by the inference engine 11. The second function 9 is to take the output of the inference engine 11 and to send this back to the user's mobile phone 3.

In some embodiments, Natural Language Processing (NLP) is used in the interface 5. NLP is one of the tools used to interpret, understand, and then use every day human language and language patterns. It breaks both speech and text down into shorter components and interprets these more manageable blocks to understand what each individual component means and how it contributes to the overall meaning, linking the occurrence of medical terms to the knowledge base. Through NLP, it is possible to transcribe consultations, summarise clinical records and chat with users in a more natural, human way.

However, simply understanding how users express their symptoms and risk factors is not enough to identify and provide reasons about the underlying set of diseases. For this, the inference engine 11 is used. The inference engine 11 is a powerful set of machine learning systems, capable of reasoning on a space of >100s of billions of combinations of symptoms, diseases and risk factors, per second, to suggest possible underlying conditions. The inference engine 11 can provide reasoning efficiently, at scale, to bring healthcare to millions.

A knowledge base 13 is provided including a large structured set of data defining a medical knowledge base. The knowledge base 13 describes an ontology, which in this case relates to the medical field. It captures human knowledge on modern medicine encoded for machines. This is used to allow the above components to speak to each other. The knowledge base 13 keeps track of the meaning behind medical terminology across different medical systems and different languages.

In particular, the knowledge base 13 may include data patterns describing a plurality of semantic triples, each including a medical related subject, a medical related object, and a relation linking the subject and the object. An example use of the knowledge base would be in automatic diagnostics, where the user 1, via mobile device 3, inputs symptoms they are currently experiencing, and the inference engine 11 can deduce possible causes of the symptoms using the semantic triples from the knowledge base 13. The system is also able to predict the probability of medical conditions occurring at future points in time.

In an embodiment, patient data is stored using a so-called user graph 15. The user graph 15 is linked to the knowledge base 13 and to the inference engine to allow predictions to be made (e.g. diagnoses) based on the stored data.

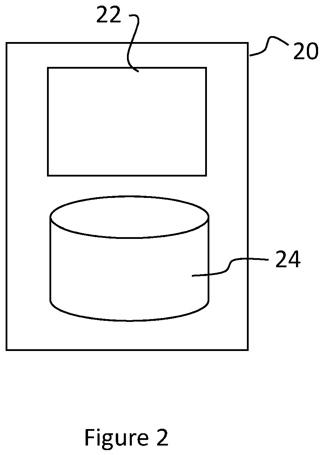

Figure 2 shows a computer for implementing the methods described herein. A computer 20 is provided to perform the processing functions described herein. This computer 20 may implement the inference engine and knowledge base of Figure 1.

The computer 20 includes a processor 22 and a memory 24. The memory 24 may include a non-transitory computer readable medium for storing electronic data. The memory 24 may refer to permanent storage. The electronic data may include instructions that, when executed by the processor 22, cause the processor to perform one or more of the methods described herein.

The methods described herein may be implemented generally using computing systems that include neural networks. A neural network (or artificial neural network) is a machine learning model that employs layers of connected units, or nodes, that are used to calculate a predicted output based on an input. Multiple layers may be utilised, with intervening layers relating to hidden units describing hidden parameters. The output of each layer is passed on to the next layer in the network until the final layer calculates the final output of the network. The performance of each layer is characterised by a set of parameters that describe the calculations performed by each layer. These dictate the activation of each node. The output of each node is a non-linear function of the sum of its inputs. Each layer generates a corresponding output based on the input to the layer and the parameters for the layer.

The embodiments described herein enable time to be more effectively encoded and decoded when making predictions based on observed events. In particular, the embodiments described herein provide a continuous mapping for time that enables asynchronous data to be more efficiently processed when predicting the likelihood of future events. This can be implemented, for instance in the system of Figure 1, to make predictions for the probability of a medical event occurring at a future point in time based on a user's medical history. Having said this, the methods described herein may be applied to a variety of machine learning prediction tasks.

Specific embodiments make use of temporal point processes (TPP). This aims to overcome issues with previous methods that are unable to handle events happening at irregular times. For instance, these networks, given a sequence, could predict the next event, but these networks are unable to determine when this event is happening, nor can they accurately model the absence of an event (that nothing is happening). To tackle this issue, the embodiments presented herein combine neural networks with the Temporal Point Process (TPP) framework, which aims to specifically model events happening at irregular times.

A TPP is fully characterised by a conditional intensity function, which acts like a density: its integral between two times returns the probability of the next event happening between these two times. However, the true conditional density of a TPPs not only allows the prediction of when the next event is happening, but also balances this prediction with the fact that no event happened between the last one and this one, namely that this event is truly the "next" one.

Specific embodiments integrate neural networking into temporal point processes and, in particular embodiments, take advantage of the Transformer Neural Network, which performs well on sequence data. Further embodiments are described that extend the TPP framework to multi-label events, allowing neural networks to handle multiple events happening at the same time.

In addition to the general application of these improved models to general prediction, these embodiments are particularly beneficial in their application to Electronic Health Records (EHRs).

Temporal Point Processes

Specific embodiments make use of temporal point processes (TPPs) to model events over time. A TPP is a random process that generates a sequence of $N$ events

$$\mathcal{H} =$$

$\{t_i^m\}_{i=1}^N$ within a given observation window $t_i \in [w_-, w_+]$.

Each event consists of labels $m = \{1, ..., M\}$ localised at times $t_{i-1} < t_i$. Labels may be independent or mutually exclusive, depending on the task.

A TPP is fully characterised through its conditional intensity $\lambda_m^*(t)$:

$$\lambda_m^*(t)dt = \lambda_m(t|\mathcal{H}_t)dt = \Pr(t_i^m \in [t, t + dt)|\mathcal{H}_t), \qquad t_{i-1} < t \leq t_i, \qquad (1)$$

which specifies the probability that a label m occurs in the infinitesimal time interval $[t, t + dt)$ given past events

$$\mathcal{H}_t = \{t_i^m \in \mathcal{H}|t_i < t\}.$$

In the present application, the following shorthand is adopted,

$$\lambda_m^*(t) := \lambda_m(t|\mathcal{H}_t)$$

where * denotes that $\lambda_m^*(t)$ is conditioned on past events.

Given a specified conditional intensity $\lambda_m^*(t)$, the conditional density $p_m^*(t)$ is

$$p_m^*(t) = p_m(t|\mathcal{H}_t) = \lambda_m^*(t) \exp\left[-\sum_{n=1}^{M} \int_{t_{i-1}}^{t} \lambda_n^*(t')dt'\right], \qquad t_{i-1} < t < t_i. \qquad (2)$$

In the present application, the notation $\Lambda$ is used to describe the cumulative conditional intensity:

$$\Lambda_m^*(t) = \Lambda_m(t|\mathcal{H}_t) := \int_{t_{i-1}}^{t} \lambda_m(t')dt', \qquad t_{i-1} < t \leq t_i. \qquad (3)$$

Using this notation, equation 2 can be rewritten as $p_m^*(t) = \lambda_m^*(t) \exp[-1 \sum_{n=1}^{M} \Lambda_n^*(t)]$.

For the multi-class setting, the log-likelihood of the sequence $\mathcal{H}$ is a form of categorical cross-entropy:

$$\log p_{\text{multi-class}}(\mathcal{H}) = \sum_{m=1}^{M} \left[\sum_{i=1}^{N} y_{i,m} \log p_m^*(t_i) - \int_{t_N}^{w_+} \lambda_m^*(t')dt'\right], \qquad (4)$$

where $t_0 \equiv w_-$, $\mathcal{H}_{t_0} = \mathcal{H}_{t_1} = \{\}$, and the term $-\sum_m \int_{t_N}^{w_+} dt' \lambda_m^*(t')$ corresponds to the probability of observing no events between the final event $t_N$ and the end of the observation window $w_+$. For the multi-label setting, the log-likelihood of $\mathcal{H}$ is a form of binary cross-entropy

$$\log p_{\text{multi-label}}(\mathcal{H}) = \log p_{\text{multi-class}}(\mathcal{H}) + \sum_{m=1}^{M} \sum_{i=1}^{N} (1 - y_{i,m}) \log\left(1 - p_m^*(t_i)\right), \qquad (5)$$

To the best of our knowledge, this is the first attempt to learn a log-likelihood using the TPP framework with a multi-labels setting. This should be especially useful to model EHRs, as a single medical consultation usually includes various events, such as diagnoses or prescriptions, all happening at the same time.

Moreover, in order to represent a TPP sequence in terms of inter-event times $\tau_i = t_i - t_{i-1} \in \mathbb{R}^+$, the following notation is utilised herein, $\bar{\lambda}_m^*(\tau) = \lambda_m^*(t_i + \tau)$ where the bar on $\overline{\lambda^*}$ indicates it is the inter-event form of the conditional intensity. This allows us to relate the conditional cumulative intensity $\Lambda_m^*(t)$ to the conditional intensity: $\overline{\Lambda}_m^*(\tau) = \int_0^\tau \bar{\lambda}_m^*(\tau')d\tau'$.

Learning Temporal Point Processes

In general, the form of the underlying TPP producing the observed data is unknown, and must be learned from data. Given a parametric conditional intensity $\bar{\lambda}_m^*(\tau; \theta)$, conditional cumulative intensity $\overline{\Lambda}_m^*(\tau; \theta)$, and event sequence $\mathcal{H}$, the optimal parameters $\theta^*$ can be obtained through Maximum Likelihood Estimation (MLE):

$$\theta^* = \text{argmax}_\theta \log p(\mathcal{H}; \theta),$$

where

$$\log p(\mathcal{H}; \theta)$$

is a parametric form of Equation (4) or Equation (5). However, finding a good parametric form has many challenges, often requiring trade-offs.

Neural Temporal Point Process Approximators

Similar to the Natural Language Processing (NLP) domain, TPP approximators may have an encoder-decoder structure. A neural TPP encoder creates event representations based on only information about other events. The decoder takes these representations and the decoding time to produce a new representation. The output of the decoder produces one or both of the conditional intensity and conditional cumulative intensity at that time.

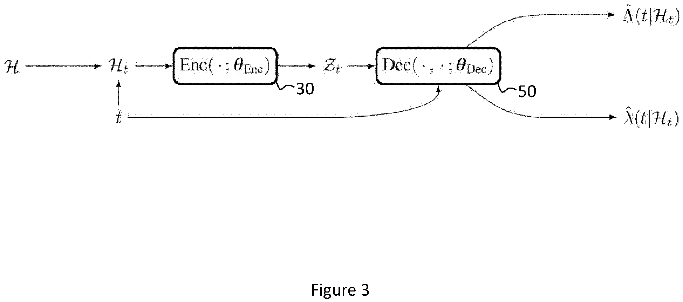

Figure 3 shows an encoder-decoder structure for modelling a neural temporal point process according to an embodiment.

The architecture includes an encoder 30 and a decoder 50. The encoder receives as input a set of events $\mathcal{H}$. These relate to observations at certain times. A query time $t$ is used to filter the events so that only "past" events are utilised in the encoder (i.e. events earlier than the query time $t$). This produces past events $\mathcal{H}_t$ in the form of times $[t_1^m, t_2^m, ..., t_n^m]$ representing times that events having the label $m$ have occurred and where $t_n < t$. The encoder 30 encodes these times through a mapping to a latent space. The encoder 30 outputs an encoded representation of the events $Z_t$.

More precisely, the encoder maps the past events $\mathcal{H}_t$ to continuous representations

$$\{z_i\}_{i=1}^{|H_t|} = \mathrm{Enc}\left(\mathcal{H}_t; \theta_{\mathrm{Enc}}\right).$$

Each $z_i$ can considered as a contextualised representation for the event at $t_i$

The decoder 50 receives as inputs the encoded representation $Z_t$ and the query time $t$ for which a prediction is to be made. The time t is later than the times input to the encoder 30. Given $Z_t$ and $t$, the decoder generates an output $\mathrm{Dec}(t; Z_t; \theta_{\mathrm{Dec}}) \in \mathbb{R}^M$ that the conditional intensity $\lambda_m^*(t)$ and conditional cumulative intensity $\Lambda_m^*(t)$ can be derived from without any learnable parameters.

That is, the decoder maps the encoded vector $Z_t$ and the query time $t$ to an output space that represents the conditional intensity $\lambda_m^*(t)$ and conditional cumulative intensity $\Lambda_m^*(t)$. The conditional intensity $\lambda_m^*(t)$ represents the expected number of events having the label m occurring at time $t$ given the previous series of events $[t_1^m, t_2^m, ..., t_n^m]$. In other words, this is the predicted instantaneous emission rate of events having the label m. This is determined over the time interval $[t, t + dt)$.

The conditional cumulative intensity $\Lambda_m^*(t)$ represents the expected cumulative number of events having the label m occurring between time $t_n$ and $t$ given the previous series of events $[t_1^m, t_2^m, ..., t_n^m]$. In other words, this is the predicted number of events between the last event in the series and time $t$. This is determined over the interval $[t_n, t)$.

Given the conditional intensity $\lambda_m^*(t)$, the probability $p(t)$ of an event having label m occurring at time $t$ can be determined using Equation (2) for the single class setting and Equation (4) for the multi-class setting.

Label Embeddings

Although the neural TPP encoder can encode temporal information in a variety of ways, it requires a label embedding step. Given a set of labels

$$m \in \mathcal{M}_i$$

localised at time $t_i$, the $D_{\text{Emb}}$ dimensional embedding $v_i$ for those labels is

$$v_i = f_{\text{pool}}\bigl(\mathcal{W}_i = \{\boldsymbol{w}^{(m)} | m \in \mathcal{M}_i\}\bigr) \in \mathbb{R}^{D_{\text{Emb}}}, \qquad (6)$$

where $\boldsymbol{w}^{(m)}$ is the learnable embedding for class m, and $f_{\text{pool}}(W)$ is a pooling function, e.g. $f_{\text{pool}}(W) = \sum_{w \in W} \boldsymbol{w}$ (sum-pooling), or

$$f_{\text{pool}}(\mathcal{W}) = \bigoplus_{\alpha=1}^{D_{\text{Emb}}}$$

max$\{w_\alpha | \boldsymbol{w} \in W\}$ (max-pooling).

In the multi-class setting, only one label appears at each time $t_i$, and so $v_i$ is directly the embedding for that label, and pooling has no effect.

As stated above, a TPP model has to provide an encoder and a decoder. While the encoder can directly be chosen among existing sequence models such as RNNs, the decoder is less straightforward due to the integral in (2).

Proposed Architecture

The decoder can model the conditional intensity and conditional cumulative intensity (in order to produce the conditional density) in a variety of ways:

- Via a closed form of the integral,
- Via sampling methods to estimate the integral,
- By directly modelling the integral and recovering the likelihood by differentiating this integral.

The main goal is to ultimately model the joint distribution of records of events, which include long term dependencies in time. In particular, specific embodiments model the joint distribution of Electronic Health Records, which inherently include long term dependencies in time.

Having said this, the recency bias of recurrent neural networks (RNNs) makes it difficult for them to model non-sequential dependencies.

As a result, the embodiments proposed herein utilise continuous-time generalisations of Transformer architectures within the TPP framework. The next section will develop the necessary building blocks to define a Transformer that can approximate the conditional intensity $\lambda_m^*(t)$ and a Transformer that can approximate the conditional cumulative intensity $\Lambda_m^*(t)$.

In specific embodiments, a Transformer is utilised to make predictions. A Transformer is a neural network that is configured to transform a sequence of input data into output data based on a learned mapping. Whilst the primary embodiment is described with reference to predicting future medical events, this can be applied to a number of applications, such as natural language processing (speech recognition, text-to-speech transformation, translation between languages, etc.), image processing, or video processing.

Attention Layer

The main building block of the Transformer is attention. This computes contextualised representations $\boldsymbol{q}_i' = \text{Attention}\bigl(\boldsymbol{q}_i, \{\boldsymbol{k}_j\}, \{\boldsymbol{v}_j\}\bigr)$ of the input queries $\boldsymbol{q}_i \in \mathbb{R}^{d_{\text{Model}}}$ from linear combinations of values $v_i \in \mathbb{R}^{d_{\text{Model}}}$, whose magnitude of contribution is governed by keys $k_i \in \mathbb{R}^{d_{\text{Model}}}$.

In its component form it is written

$$q'_i = \text{Attention}\big(q_i, \{k_j\}, \{v_j\}\big) = \sum_j \alpha_{i,j} v_j, \qquad\qquad \alpha_{i,j} = g\big(E_{i,j}\big), \qquad (9)$$

where $\alpha_{i,j}$ are the attention coefficients, $E_{i,j}$ are the attention logits, and $g$ is an activation function that is usually taken to be the softmax:

$$\text{softmax}_j\big(E_{i,j}\big) = \frac{\exp\big(E_{i,j}\big)}{\sum_k \exp\big(E_{i,k}\big)}. \qquad (10)$$

Multi-head attention produces $q'_i$ using $H$ parallel attention layers (heads) in order to jointly attend to information from different subspaces at different positions

$$\text{MultiHead}\big(q_i, \{k_j\}, \{v_j\}\big) = W^{(o)} \left[ \oplus_{h=1}^H \text{Attention}\left(W_h^{(q)} q_i, \left\{W_h^{(k)} k_j\right\}, \left\{W_h^{(v)} v_j\right\}\right)\right]$$

where $W_h^{(q)}, W_h^{(k)} \in \mathbb{R}^{d_k \times d_{\text{Model}}}$, $W_h^{(v)} \in \mathbb{R}^{d_v \times d_{\text{Model}}}$ and $W^{(o)} \in \mathbb{R}^{d_{\text{Model}} \times h\, d_v}$ are learnable projections.

**Attention activation** As the softmax of any vector function $f(\tau)$ is not monotonic in $\tau$, we cannot use it in any decoder to approximate $\overline{\Lambda}_m^*(\tau)$. Having said this, the element-wise sigmoid function can be employed instead, $\sigma(x_i)$ = $\exp(x_i)/(1 + \exp(x_i))$, which, although it does not have the same regularising effect as the softmax, it still behaves in a way that is appropriate. In order for the whole attention mechanism to be positive monotonic in $\tau$, the $v_j$ must be positive.

**Masking** The masking in the encoder of the present embodiment is such that events only attend to themselves and events that occurred strictly before them in time. The masking in the decoder is such that the query only attends to events occurring strictly before the query time.

**Other Layer Component** As in the standard transformer, the present embodiments follow each multi-head attention block with residual connections, batch normalisation, a Multi-Layer Perceptron (MLP), and further batch normalisation and residual connections.

The queries, keys, and values are input into the attention equation, which outputs an attention vector as a weighted sum of the values. This is then passed into a neural network (for instance, a feed forward neural network) to decode the attention matrix and produce output probabilities. The output probabilities are a set of probabilities $p_i \in \mathbb{R}^{d_v}$, $i = 1,...,n_v$ representing a probability for each potential outcome in the current vocabulary (e.g. the set of potential events being predicted, or the set of potential words). This may be in the form of a vector.

In the context of Figure 3, the encoder 30 and decoder 50 may be implemented via transformer neural networks. These shall be described in more detail below, but in summary, the encoder receives 30 an input representing a sequence of marked times (representing the times for events). The input is formed into an encoding (a set of hidden variables representing the input). The encoding is then passed into the decoder neural network 50, along with a target (in this case, the query time $t$).

The decoder neural network 50 then determines an output. This may be a set of one or more probabilities.

Where attention is being applied, the encoding determined by the encoder 30 may be a set of values and a set of keys. The target may be embedded and then utilised by the decoder 50 to determine a set of queries. The decoder 50 may then calculate the corresponding attention vector based on the keys, values and queries, and then pass this vector into a neural network (e.g. a feed forward neural network) to produce the output.

In addition to this attention mechanism, the encoder 30 and decoder 50 may perform their own self-attention steps on the input and target respectively. For instance, the encoder 30 may generate keys, values and queries based on the embedded input before generating the corresponding attention vector and passing this into a neural network to determine the keys and values for passing to the decoder 50. Equally, the decoder 50 may generate keys, values and queries based on the embedded target before generating the corresponding attention vector for determining the queries.

Absolute Temporal Self-Attention

Previous methods, when embedding inputs and targets, make use of a position embedding. This encodes the position of a given observation within a sequence. For instance, in the sentence "I have a headache", the word "headache" is at position 4 within the sentence, as it is the fourth word. The position is encoded to form a position embedding and this position embedding is then added to an embedding of the observation (e.g. an event embedding) to form a combined input embedding that is input into the encoder.

For instance, one example utilises multiplicative logits:

$$E_{i,j} = \frac{q_i^T k_j}{\sqrt{d_k}} \qquad (13)$$

and encodes absolute positional information into $q_i$, $k_j$ and $v_j$. This can be achieved by producing positional embeddings where the embeddings of relative positions are linearly related $x(i) = R(i - j)x(j)$ for some rotation matrix $R(i - j)$.

Whilst positional encoding this can be effective for streams of data discontinuous data (such as a set of words) this is less effective when encoding continuous data. For instance, a medical history of a patient may include certain medical events (for instance, being diagnosed with a medical condition, as well as a time for each event. If position encoding is used, then the time data is poorly encoded, as only the order of events is encoded, rather than the relatively separation of events in time.

In light of the above, embodiments make use of a continuous time embedding when embedding inputs and targets. The continuous time embedding is a specific vector, given a specific time, of the same size as the event embeddings.

In a specific embodiment, this continuous time embedding (*Temporal*(*t*)) generalises the above rotation embedding to the continuous domain:

$$Temporal(t) = \bigoplus_{k=0}^{\frac{d_{\text{Model}}}{2}-1} \sin(\alpha_k t) \oplus \cos(\alpha_k t) \in \mathbb{R}^{d_{\text{Model}}},$$

$$\alpha_k = \beta \times 1000^{-2k/d_{\text{Model}}} \qquad (14)$$

where $\oplus$ is used to represent a concatenation and $\beta$ is a temporal rescaling parameter that plays the role of setting the shortest time scale the model is sensitive to. For this encoding to be well defined, $d_{\text{Model}}$ should be an integer multiple of 2. In some embodiments, $d_{\text{Model}}$ is 512, although other sizes may be used.

In practice, $\beta$ can be estimated as $\hat{\beta} = \mathbb{E}[(w_+ - w_-)/N]$ from the training set, so that a TPP with smaller average gaps between events is modelled at a higher granularity by the encoding. The temporal rescaling parameter, $\beta$ can also be implemented as a learnable parameter of the model; however, this can make the model difficult to optimise.

Note that $\hat{\beta} = 1$ for a language model. In addition, $\beta$ does not change the relative frequency of the rotational subspaces in the temporal embedding from the form discussed above with regard to Equation 13.

The temporal embedding of Equation 14 is not monotonic in t and therefore cannot be used in any conditional cumulative approximator. In order to model the conditional cumulative intensity $\Lambda_m^*(t)$, the present embodiment makes use of a multi-layer perceptron (MLP)

$$ParametricTemporal(t) = \text{MLP}(t; \theta_{\geq 0}) \in \mathbb{R}^{d_{\text{Model}}}, \qquad (15)$$

where $\theta_{\geq 0}$ indicates that all projection matrices have positive or zero values in all entries. Biases may be negative. If monotonic activation functions for the MLP are chosen, then it is a monotonic function approximator.

The temporal encoding of an event at $t_i$ with labels $\mathcal{M}_i$ is then

$$x_i = \text{TemporalEncode}(t_i, \mathcal{M}_i) = v_i(\mathcal{M}_i)\sqrt{d_{\text{Model}}} + \text{Temporal}(t_i) \in \mathbb{R}^{d_{\text{Model}}}, \qquad (16)$$

where ParametricTemporal($t_i$) is used instead of Temporal($t_i$), where appropriate.

Relative Temporal Self-Attention

Relative positional encoding has been shown to be very successful in modelling music. Here, the logits take the form

$$E_{i,j} = \frac{q_i^T\left(k_j + f(i,j)\right)}{\sqrt{d_k}}, \qquad (17)$$

where $f(i,j) \in \mathbb{R}^{d_k}$ is a representation of the relative separation $i$ - $j$. Specifically,

$$f_{i,j} = \begin{cases} w^{(-k)} & \text{for} \quad i - j \leq -k \\ w^{(i-j)} & \text{for} \quad |i - j| < k \\ w^{(k)} & \text{for} \quad i - j \geq k \end{cases} \qquad (18)$$

where $w^{(i-j)}$, $i$ - $j$ = -$k$,...,0,...,$k$ are a set of 2$k$ + 1 learnable embeddings for the relative position $i$ - $j$ up to some cut-off hyperparameter $k$.

In this scenario, $q_i$, $k_j$ and $v_j$ are not explicitly encoded with absolute positional information, as was the case in Equation (16). Instead, all explicit comparisons about relative separation are handled by $f(i,j)$.

As with the absolute temporal self-attention, this is generalised to the continuous domain. If there is no query representation (e.g. in the first layer of the decoder) then the logits take the form

$$E_{i,j} = \frac{f(t_i, t_j, k_j)}{\sqrt{d_k}}, \qquad f(t_i, t_j, k_j) = \text{MLP}(t_i, t_j, k_j; \theta) \in \mathbb{R}^{d_{\text{Model}}}. \qquad (19)$$

If there is a query representation present (e.g. in the encoder, or subsequent layers of the decoder), then the logits take the form

$$E_{i,j} = \frac{f(t_i, t_j, q_i, k_j)}{\sqrt{d_k}}, \qquad f(t_i, t_j, q_i, k_j) = \text{MLP}(t_i, t_j, q_i, k_j; \theta) \in \mathbb{R}^{d_{\text{Model}}}. \qquad (20)$$

It is important for the self attention MLP to be aware of the key and query representation in order to jointly make use of times and labels.

Transformer Architecture

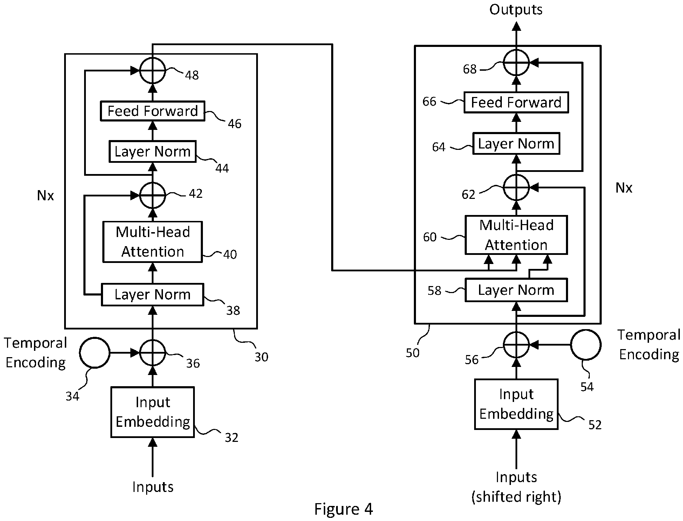

Figure 4 shows an example of an encoder-decoder transformer architecture according to an embodiment. As in Figure 3, the system includes an encoder 30 and a decoder 50.

As mentioned above, the encoder 30 takes as an input, event embeddings 32 and a time embedding 34. The embedded events are encoded 36 using the temporal embedding 34, producing temporally encoded event representations, $x_i \in \mathbb{R}^{d_{\text{Model}}}$ These event representations are input into the encoder 30.

In the present embodiment, the encoder 30 applies $N_{Layers}^{E}$ of multiplicative attention with softmax activation as the keys, queries and values of the first layer. These self-attention layers, combined with the temporal encoder form the encoder 30, which results in representation

$$Z = \text{Enc}(\mathcal{H}, \theta_{\text{Enc}}),$$

where each $z_i \in \mathbb{R}^{d_{\text{Model}}}$.

Specifically, the encoder 30 performs layer normalization 38, the output of this is fed into a multi-head attention block 40 and along a residual connection. The output of the multi-head attention block 40 is combined 42 (e.g. via addition) with the output of the layer normalisation block 38 via the residual connection.

The output of this combination is input into a second layer normalization block 44 and a second residual connection. The second layer normalization block 44 feeds into a feed forward neural network 46. The output of the feedforward neural network 46 is then combined 48 (e.g. via addition) with the output of the first combination via the second residual connection to produce the encoded representations

$$Z = \text{Enc}(\mathcal{H}, \theta_{\text{Enc}}).$$

These encoded representations are passed to the decoder 50.

The decoder 50 takes as inputs a temporal embedding 54 of a query time and the events input into the encoder 30, shifted right. The events are embedded 52 and encoded via temporal encoding 56 using the temporal embedding of the query time 54. That is, given a query time $t$, a temporal embedding is produced with no label embedding (there are no labels for a given query). Following layer normalisation 58, this query is used as the query representation $q \in \mathbb{R}^{d_{\text{Model}}}$ in the first layer of the decoder 50.

As with the encoder 30, the decoder 50 performs is formed of $N^{D}_{Layers}$ of multiplicative multi-head attention with softmax activation. The keys and values for the first layer of the decoder are the $z \in Z_t$ from the encoder 30 output. That is, the normalized query is fed into a multi-head attention block 60 along with the output of the encoder 30.

The output of the multi-head attention block 60 is combined 62 (e.g. via addition) with the query via a first residual connection. This combination is fed into a second layer normalization block 64 as well as a second residual line. The second layer normalization block 64 feeds into a feed forward neural network 66. The output of the feedforward neural network 66 is then combined 68 (e.g. via addition) with the output of the first combination 62 via the second residual connection to produce an output representative of the intensity.

After the final transformer decoder layer, the output is projected from $\mathbb{R}^{d_{\text{Model}}}$ to $\mathbb{R}^{M}$ using a MLP. This is followed by a scaled softplus activation. This directly models the intensity.

Unlike the embodiment shown in Figure 3, which models both the conditional intensity $\lambda^*_m(t)$ and the conditional cumulative intensity $\Lambda^*_m(t)$, the embodiment of Figure 4 can be configured to model the intensity of one of $\lambda^*_m(t)$ or $\Lambda^*_m(t)$. This is acceptable, however, as these two intensity terms are linked. Once one of these values has been calculated, the other can be easily calculated. Accordingly, it is sufficient to model only one of the conditional intensity or the cumulative intensity.

The above embodiment applies multiplicative temporal self-attention. In an alternative embodiment, relative temporal self-attention is applied. In this case, the architecture is the same as for multiplicative temporal self-attention, except that the events are encoded using only their embeddings, and the attention is the relative type, rather than multiplicative type. No query representation is used in the first layer of the decoder (as is discussed in the relative attention section).

In light of the above, it can be seen that by applying a continuous embedding to encode time, and by making use of temporal point processes, a transformer network can be configured to more effectively make predictions based on asynchronous input data. In specific embodiments the continuous embedding is a continuous mapping onto a continuous space in which all points within the space are related by a linear transformation (for example, a rotation), depending on the relative difference in time. The linear transformation observes the size of the vectors, thereby ensuring that the embedding can be effectively added to the embedded events.

By making use of linear transformations, a neural network can be more effectively trained based on the continuous time embeddings. This is because neural networks are good at learning relationships based on linear transformations. By making use of a rotation as the linear transformation, the magnitude of the time embedding is fixed. This ensures that the temporal encoder maintains the relative importance of weighting of the various time embeddings.

Whilst it is important that time is encoded continuously when encoding an input vector, it is also important that the decoder can function continuously to allow the system to be queried at any point in time. Without this feature, a system would only be able to provide predictions at discrete time points. Furthermore, the embodiments described herein allow a prediction to be made for a specific time without requiring predictions for all intervening points in time. This ensures improved efficiency over recurrent systems, such as feed forward neural networks.

To achieve the above aim, embodiments make use of a continuous time embedding for the time point being predicted. This is input into the decoder, along with the encoding from the encoder. This allows a set of predictions to be generated for the specific time point that is embedded.

Positive and Positive Monotonic Approximators

It should be noted that rectifier linear unit (ReLU) networks are not able to have negative derivatives of order 2. The same applies for softplus.

In order to model $\lambda_m^*(t)$ with a decoder, $Decoder(t, Z_t; \theta) \in \mathbb{R}_{\geq 0}^m$. This is simple to achieve with a NN, as it only requires the final activation function to be positive. Neural TPP approximators can employ exponential activation, which is equivalent to choosing to directly model $\log \lambda_m^*(t)$ instead of $\lambda_m^*(t)$.

Alternatively, scaled softplus activation $\sigma_+(x_m) = s_m \log\left(1 + \exp\left(\frac{x_m}{s_m}\right)\right) \in \mathbb{R}_{\geq 0}^m$ with learnable $s \in \mathbb{R}^m$ can be used. Scaled softplus is strictly positive, can approach the Rectified Linear Unit (ReLU) activation limit

$$\lim_{s_m \to 0} \sigma_+(x_m) = \text{ReLU}(x_m) = \max(x_m, 0).$$

Ultimately, writing a neural approximator for $\lambda_m^*(t)$ is relatively simple as there is very little constraint on the NN architecture itself. Of course, this does not mean it is easy to train.

Modelling $\Lambda_m^*(t)$ with a decoder, however, is more difficult from a design perspective. The *Decoder(t, Z_t; θ)* must be positive which, as discussed above, is not too difficult. In practice the present embodiments model $\overline{\Lambda}_m^*(\tau)$ with the decoder, which has the properties $\overline{\Lambda}_m^*(0) = 0$ and $\lim_{\tau \to \infty} \overline{\Lambda}_m^*(\tau) = \infty$. The first of these is satisfied by parameterising the decoder as *Decoder(τ,Z_t;θ) = f(τ,Z_t;θ) - f(0,Z_t;θ)*. The second of these properties can be ignored as, in practice, it deals with distributional tails.

In order for function to be monotonic this to be achieved, *f(τ,Z_t;θ)* needs to be parameterised such that *δf(τ,Z_t;θ)/δτ* > 0. Assuming that *f* is given by a multi-layer NN, where the output of each layer *f_i* is fed into the next *f_{i+1}*, then *f(τ) = (f_L ∘ f_{L-1} ∘ ... ∘ f_2 ∘ f_1)(τ)*, where *(f_2 ∘ f_1)(t) = f_2(f_1(t))* denotes function composition and L is the number of layers. Then

$$\frac{df(\tau)}{d\tau} = \frac{df_L}{df_{L-1}} \frac{df_{L-1}}{df_{L-2}} \dots \frac{df_2}{df_1} \frac{df_1}{df_\tau}. \tag{21}$$

It can be seen that, as long as each step of processing produces an output that is a monotonic function of its input, i.e. *df_i/df_{i-1} ≥ 0* and *df_1/df_τ ≥ 0*, then *f(τ)* is a monotonic function of τ. This means that not all standard NN building blocks will be available for use in modelling $\Lambda_m^*(t)$.

More generally, note the following. Let the Jacobian matrix of the vector valued function *f* be *J_{i,j} = δf_i/δx_j*. Then, let *J^{(f)}* and *J^{(g)}* be the Jacobian matrices for *f* and *g* respectively. We then have

$$J^{(f \circ g)}(x) = J^{(g)}[f(x)]J^{(f)}(x). \tag{22}$$

**In order for** the final function composition to be monotonic in each x it is sufficient for the Jacobian matrix product to be positive; it is not required that the individual Jacobian matrices are positive themselves.

Activation Functions

Given the constraints on the model, it is not sufficient to simply use rectified linear units as the activation functions. The aim is to approximate the monotonic function $\Lambda_m^*(\tau)$, which itself must be positive. At the same time, we are interested in the derivative $\lambda_m^*(\tau) = d\Lambda_m^*(\tau)/d\tau$. It is important not to accidentally constrain the derivative of $\lambda_m^*(\tau)$. This can be any value. In principle, we would like derivatives of $\lambda_m^*(\tau)$ of any order to be able to take any sign. The only constraint is that $\lambda_m^*(\tau) = d\Lambda_m^*(\tau)/d\tau$ is positive. Consider the function $h(\tau) = (f \circ g)(\tau)$, then

$$\frac{dh(\tau)}{d\tau} = f'\big(g(\tau)\big)g'(\tau), \qquad \frac{d^2h(\tau)}{d\tau^2} = f''\big(g(\tau)\big)g'(\tau)^2 + f'\big(g(\tau)\big)g''(\tau). \quad (29)$$

The only constraint that we want to enforce is $dh(\tau)/d(\tau) > 0$. Clearly to do this, as discussed in the above section, all that is required is for $f'(g(\tau)) > 0$ and $g'(\tau) > 0$ for all $\tau$. In general, this does not limit value of the second derivative $d^2h(\tau)/d\tau^2$ in any way, since the signs of $f''(g(\tau))$ and $g''(\tau)$ are not known. This is good, as it may be important for $d\lambda(\tau)/d\tau \sim d^2h(\tau)/d\tau^2$ to be negative (i.e. for the intensity to decay in time).
Let's consider the case that $f$ corresponds to an activation function, and $g$ corresponds to any monotonic function in $\tau$ with unknown higher order derivatives. Consider ReLU

$$\frac{d\text{ReLU}(x)}{dx} = \begin{cases} 0 & \text{if } \leq 0 \\ 1 & \text{if } > 0 \end{cases}, \qquad \frac{d^2\text{ReLU}(x)}{dx^2} = 0. \quad (30)$$

Isolated ReLU activations are fine in neural network architectures, that is, embodiments can make use of ReLU as the activation function $f$, providing that the function it is applied to $g$ can have negative second order derivatives. However, if ReLU activations are used everywhere in the network, $f''(g(\tau)) = g''(\tau) = 0$ and therefore $d\lambda(\tau)/d\tau = 0$ which means that the resulting model is equivalent to the conditional Poisson process

$$\lambda(\tau|\mathcal{H}_t) = \mu(\mathcal{H}_t)$$

earlier.
As an alternative, tanh may be utilised as the activation function:

$$\frac{d\tanh(x)}{dx} = \text{sech}^2(x) \in (0,1), \qquad \frac{d^2\tanh(x)}{dx^2} = 2\tanh(x)\,\text{sech}^2(x) \in (c_-, c_+), \quad (31)$$

where $c_\pm = \log(2 \pm \sqrt{2})/2$.
Furthermore, the adaptive Gumbel activation function may be used:

$$\sigma(x_m) = 1 - [1 + s_m \exp(x_m)]^{-\frac{1}{s_m}} \quad (32)$$

where $\forall m : s_m \in \mathbb{R}_{>0}$ is a learnable parameter and $m$ is a dimension/activation index. where $\forall m : s_m \in \mathbb{R}_{>0}$ is a learnable parameter and $m$ is a dimension/activation index.

For brevity, while discussing the analytic properties of the adaptive Gumbel activation the dimension index m will not be used below; however, since the activation is applied element-wise, the analytic properties discussed directly transfer to the vector application case.

For any $s > 0$:

$$\lim_{x \to -\infty} \sigma(x) = 0, \qquad \lim_{x \to \infty} \sigma(x) = 1 \qquad (33)$$

The first derivative is

$$\frac{d\sigma(x)}{dx} = \exp(x) \left[1 + s \exp(x)\right]^{-\frac{s+1}{s}} \in (0, 1/e), \qquad (34)$$

so the adaptive Gumbel activation satisfies the desired input monotonicity requirements. This derivative vanishes at $\pm\infty$

$$\lim_{x \to \pm\infty} \frac{d\sigma(x)}{dx} = 0. \qquad (35)$$

The second derivative is

$$\frac{d^2\sigma(x)}{dx^2} = \exp(x) \left[1 - \exp(x)\right]\left[1 + s \exp(x)\right]^{-\frac{2s+1}{s}} \in (c_-, c_+), \qquad (36)$$

where $c_{\pm} = \left(\pm\sqrt{5} - 2\right) \exp\left[(\pm\sqrt{5} - 3)/2\right].$ As the second derivative can be negative, the intensity function is able to decrease when the Analytic conditional intensity approach is being used (e.g. to model decays). The second derivative also vanishes at $\pm\infty$

$$\lim_{x \to \pm\infty} \frac{d^2\sigma(x)}{dx^2} = 0. \qquad (37)$$

So in general, the limiting properties of derivatives of tanh and adaptive Gumbel are the comparable. Where they differ is that the Gumbel activation has a learnable parameter $s_m$ for each dimension m. These parameters control the magnitude of the gradient through Equation (34) and the magnitude of the second derivative through Equation (36). Put another way, this learnable parameter controls the sensitivity of the activation function to changes in the input, and allows the neural network to be selective in where it wants fine-grained control over its first and second derivatives gradient (and therefore have an output that changes slowly over a large range in the input values), and where it needs the gradient to be very large in a small region of the input.

Specifically, from the second derivative, the maximum value of the first derivative is obtained at $x = 0$, which corresponds to the mode of the Gumbel distribution. For any value of $s$,

$$\max_x \frac{d\sigma(x)}{dx} = (1 + s)^{-\frac{2s+1}{s}}. \qquad (38)$$

By sending $s \to 0$, the largest maximum gradient of $1/e$ is obtained. This occurs in a short window in $x$. By sending $s \to \infty$, the smallest maximum gradient of 0 is obtained. This occurs for all $x$.

Using tanh or adaptive Gumbel as activation functions prevents the second derivative of the neural network from being zero; however, they both have an issue, in that they do not allow the property $\lim_{t \to \infty} \Lambda^*_m(t) = \infty.$ In order to solve this, the Gumbel-Softplus activation is introduced herein:

$$\sigma(x_m) = \text{Gumbel}(x_m)\big(1 + \text{Softplus}(x_m)\big), \tag{39}$$

where Gumbel is defined in Equation (32) and Softplus is a parametric softplus function:

$$\text{Softplus}(x_m) = \frac{\log(1 + s_m \exp(x_m))}{s_m}. \tag{40}$$

This activation function is a combination of the adaptive Gumbel activation function and the parametric softplus activation function.

This activation function has the property $\lim_{t \to \infty} \sigma(t) = \infty$, and therefore the neural network does not have an upper bound defined by its parameters.

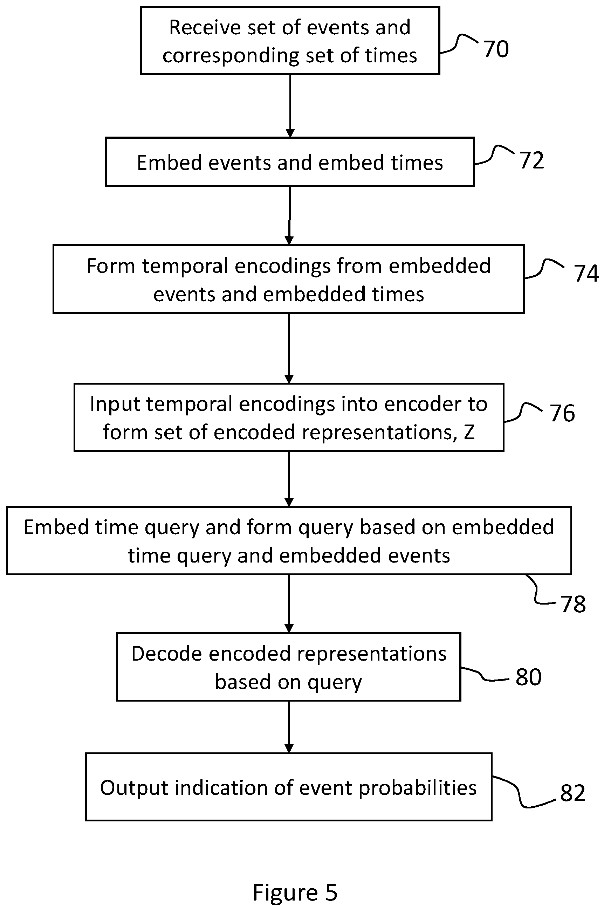

Figure 5 shows a method for determining the probabilities of events at a certain time based on an input set of events according to an embodiment.

A set of events is received with a corresponding set of times 70. That is, each event has a corresponding time for the event. Accordingly, the input is the set $\{e_i, t_i\}_{i=1}^n$ where $e_i$ and $t_i$ are the $i^{th}$ event and time respectively and $n$ is the total number of events. This may be a set of medical data (for instance, a patient medical history including medical events and the corresponding times for the events). Equally, whilst the term "event" is used, this may be any form of observed data or label with a corresponding time, for instance, a set of words and the time at which the words were observed.

The events are embedded and the times are embedded 72. This forms a set of embedded events and embedded times. The continuous time embedding discussed herein is utilised to determine the time embedding for each time (e.g. that shown in Equation 14 or Equation 15). Any form of embedding may be utilised for the events, provided that the time and event embeddings have equal dimensions.

A temporal encoding is then formed 74 from each event embedding and its corresponding time embedding (e.g. using the method of Equation 16). This produces a set of temporal encodings that encode both the event data and the time data.

The temporal encodings are input 76 into an encoder neural network to form a set of encoded representations, $Z$, of the events. A corresponding encoded representation $z_i$ is determined for each temporal encoding. Where the encoder makes use of self-attention, the encoder calculates a key, value and query for each temporal encoding and uses these to calculate the corresponding encoded representation, as discussed above.

A time query is received that relates to the time for which the prediction is being made. This time query may be received in advance of any of steps 70-78. This time query may be received as an input from a user, for instance, the user requesting a prediction of the likelihood of an event at that time.

The time query is embedded using the continuous time embedding discussed herein and a query is formed from the embedded time query and the set of embedded events 78.

The encoded representations are decoded based on the query 80. This can be achieved by passing the query and encoded representations through a decoder. The decoder may be a transformer neural network. In this case, the query may form the query whilst the encoded representations can form the keys and values for an attention mechanism within the decoder.

The decoder then outputs an indication of the event probabilities occurring by the query time 82. The result of the decoding process is a set of intensity values indicative of the probability of respective events occurring by the query time. Each intensity might be a conditional intensity or a conditional cumulative intensity. The system might output the raw intensity values or may convert these to probabilities of the respective events occurring.

The full set of probabilities may be output, or the system may select one or more of the probabilities or corresponding events to output. For instance, the system may select the most probable event and output this an indication of this event (for instance, a notification to the user). Equally, the least probable event may be output. Alternatively, or in addition, the user may request the probability of one or more specific events, in which case the corresponding probability value(s) may be output.

Through this method, a computing system may determine a set of predictions for the probability of one or more events for a specified time. This avoids the need to process intervening time-points (such as through a recurrent neural network), thereby allowing the system to calculate the final, desired prediction more efficiently. Furthermore, this allows the system to more accurately model predictions to take into account time, thereby improving the accuracy of the predictions. Furthermore, the cumulative intensity may be calculated, that provides an indication not only that the event will occur at the given time, but the probability that it will occur at any time up until the given time. This is useful for certain specific prediction tasks, and in particular, analysis of medical records.

As discussed above, the method may operate on a set of observations, including pairs of observed data $x_i$ and time values $t_i$, that are input into the encoder. The encoded data may be passed to the decoder to condition the decoder for the prediction. A time query is input into the decoder corresponding to a time value for the prediction. The decoder utilises the time query and the encoded data to determine a set of one or more probabilities for the query time.

Each data point $x_i$ may be represented by a vector indicating the probability of a set of one or more events, with each value in the vector indicating the probability of a corresponding event. In the observed data this may be a one-hot encoded vector, in that each data point represents the probability of a corresponding observed event is 1, with all other potential events having a probability of 0.

As discussed, the system can be trained to make predictions based on observed data. Maximum likelihood training can be performed, to optimise the parameters of the neural networks of the encoder and decoder. This can be performed via any suitable training method with appropriate loss functions such as gradient descent or multiclass cross-entropy.

In each iteration of training, the parameters $\theta$ of the neural network may be adjusted according to the below update:

$$\theta^* = \underset{\theta}{\operatorname{argmax}} \, p(O|\theta)$$

where $\theta^*$ represents the updated parameters of the neural network, $O$ represents the observed training data, and $p(O|\theta)$ represents the probability of the observed training data given the parameters $\theta$. This may be split between training the encoder and training the decoder, as well as training any other neural networks utilised within the process, such as a multi-layer perceptron for producing time embeddings.

It should be noted that, whilst the above embodiments describe the prediction of events continuously over time, the methodologies described herein are equally applicable to making predictions for any general observations continuously over their position. That is, any reference to "time" and "temporal encoding" can be considered a reference to a "position" and a "position encoding". A sequence of observations can be received along with their respective positions within the sequence. They can be encoded, using the methodology described herein, based on their positions. A query can be formed based on query position and the number of instances of the observation at the query position can be determined.

According to the embodiments described herein, more accurate predicted observations can be obtained for arbitrary positions (e.g. times) by effectively encoding position information using a continuous embedding function. This can be applied for a variety of different machine learning tasks, such as prediction of future events (e.g. future medical events conditioned on a history of past medical events) or language modelling. For instance, when applied to language modelling, a word at any position in a sequence may be predicted, rather than the system being constrained to predict the next word in the sequence. In this case, the continuous embedding function can be applied to word position to produce an encoded representation, with the time query being adapted to be a word position query that is embedded and used to decode the encoded representation.

Whilst Figures 4 and 5 describe a module including an encoder-decoder pair, a number of modules may be implemented. In this case the output of one module is used as the input of a subsequent module. Furthermore, whilst self-attention was described with reference to an embodiment implementing multiple attention functions in parallel (multi-head attention) a single attention function (a single head) may equally be utilised.

Whilst the above embodiments are described as making use of attention, any form of encoder-decoder arrangements may be utilised, regardless of whether they implement attention.

Implementations of the subject matter and the operations described in this specification can be realized in digital electronic circuitry, or in computer software, firmware, or hardware, including the structures disclosed in this specification and their structural equivalents, or in combinations of one or more of them. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

While certain embodiments have been described, these embodiments have been presented by way of example only, and are not intended to limit the scope of the inventions. Indeed the novel methods and systems described herein may be embodied in a variety of other forms; furthermore, various omissions, substitutions and changes in the form of methods and systems described herein may be made without departing from the spirit of the inventions. The accompanying claims and their equivalents are intended to cover such forms of modifications as would fall within the scope and spirit of the inventions.

**Claims**

1.  A computer implemented method comprising:

    obtaining a set of observations and a set of corresponding position values for the observations;
    embedding the set of position values to form a set of embedded position values using a first continuous position embedding;
    encoding each observation using its corresponding embedded position value to form a set of encoded observations;
    encoding the set of encoded observations using an encoder neural network to produce a set of encoded representations;
    obtaining a query indicating a position for a prediction;
    embedding the query to form an embedded query using a second continuous position embedding; and
    decoding the encoded representations using a decoder neural network conditioned on the embedded query to determine an expected number of instances of the predicted observation occurring at a position indicated by the query given the set of observations.

2.  The method of claim 1 wherein each observation is an observed event and each position is a time value for the corresponding observed event, encoding each observation using its corresponding embedded position value forms a set of temporal encoded observations, the predicted observation is a predicted event and the position indicated by the query is a time for the predicted event.

3.  The method of claim 1 or claim 2 wherein the encoder neural network and decoder neural network model the expected number of instances of the predicted observation occurring at the position indicated by the query as a temporal point process such that the decoder neural network determines a conditional intensity indicative of the expected number of instances of the predicted observation occurring at the position indicated by the query.

4.  The method of claim 3 wherein the conditional intensity comprises one of an instantaneous conditional intensity representing the expected number of instances of the predicted observation occurring specifically at the position indicated by the query, or a cumulative conditional intensity representing the expected number of instances of the predicted observation occurring over a range ending at the position indicated by the query.

5.  The method of claim 4 wherein the conditional intensity is a cumulative conditional intensity and the second continuous position embedding is monotonic over position.

6.  The method of claim 5 wherein the decoder neural network makes use of one or more of a sigmoid activation function, an adaptive Gumbel activation function or a tanh activation function when decoding the encoded representations.

7.  The method of claim 6 wherein the decoder neural network makes use of an activation function formed from a combination of an adaptive Gumbel activation function and a softplus activation function when decoding the encoded representations.

8.  The method of any preceding claim wherein each of the first and second continuous position embeddings is a continuous mapping that maps position values onto a continuous space in which positions within the space are related by a linear transformation depending on difference between the positions.

9.  The method of claim 8 wherein the linear transformation is a rotation.

**10.** The method of any preceding claim wherein one or both of the first and second continuous position embedding is implemented through a corresponding encoder neural network.

**11.** The method of any preceding claim wherein one or both of the first and second continuous position embeddings is

$$\boldsymbol{Emb}(x) = \bigoplus_{k=0}^{\frac{d_{\text{Model}}}{2} - 1} \sin(\alpha_k x) \oplus \cos(\alpha_k x) \in \mathbb{R}^{d_{\text{Model}}}$$

where:

x represents a position value;
**Emb**(x) represents an embedded position value for the position value;
$\bigoplus_{k=0}^{\frac{d_{\text{Model}}}{2} - 1}$ represents a concatenation from $i$ = 0 to $i = \frac{d_{\text{Model}}}{2} - 1$;
$d_{\text{Model}}$ represents the dimension of the embedded position value; and
$\alpha_k$ is a constant of a set of constants $[\alpha_k]_{k=0}^{\frac{d}{2} - 1}$.

**12.** The method of any preceding claim wherein the decoder neural network implements an attention mechanism that makes use of an attention query formed from the embedded query and keys and values formed from the set of encoded representations, wherein the attention mechanism produces an attention vector based on the attention query, keys and values, which is input into a neural network to decode the encoded representations.

**13.** The method of any preceding claim further comprising updating parameters for one or more of the encoder neural network and the decoder neural network based on a loss function calculated based on the predicted observation and a training observation.

**14.** A computing system comprising one or more processors configured to:

obtain a set of observations and a set of corresponding position values for the observations;
embed the set of position values to form a set of embedded position values using a first continuous position embedding;
encode each observation using its corresponding embedded position value to form a set of encoded observations;
encode the set of encoded observations using an encoder neural network to produce a set of encoded representations;
obtain a query indicating a position for a prediction;
embed the query to form an embedded query using a second continuous position embedding; and
decode the encoded representations using a decoder neural network conditioned on the embedded query to determine an expected number of instances of the predicted observation occurring at a position indicated by the query given the set of observations.

**15.** A non-transitory computer readable medium comprising executable code that, when executed by a processor, causes the processor to perform a method comprising:

obtaining a set of observations and a set of corresponding position values for the observations;
embedding the set of position values to form a set of embedded position values using a first continuous position embedding;
encoding each observation using its corresponding embedded position value to form a set of encoded observations;
encoding the set of encoded observations using an encoder neural network to produce a set of encoded representations;
obtaining a query indicating a position for a prediction;
embedding the query to form an embedded query using a second continuous position embedding; and

decoding the encoded representations using a decoder neural network conditioned on the embedded query to determine an expected number of instances of the predicted observation occurring at a position indicated by the query given the set of observations.

Figure 1

Figure 2

$$\mathcal{H} \longrightarrow \mathcal{H}_t \longrightarrow \boxed{\text{Enc}(\,\cdot\,;\boldsymbol{\theta}_{\text{Enc}})} \longrightarrow \mathcal{Z}_t \longrightarrow \boxed{\text{Dec}(\,\cdot\,,\,\cdot\,;\boldsymbol{\theta}_{\text{Dec}})} \nearrow \hat{\Lambda}(t|\mathcal{H}_t)$$

$$t \longrightarrow$$

$$\searrow \hat{\lambda}(t|\mathcal{H}_t)$$

30      50

Figure 3

Outputs

48

Feed Forward — 46

Layer Norm
44

42

Multi-Head
Attention — 40

Layer Norm
38

Nx

Temporal
Encoding

34

36

30

Input
Embedding

32

Inputs

68

66 — Feed Forward

64 — Layer Norm

62

60

Multi-Head
Attention

58 — Layer Norm

Nx

Temporal
Encoding

50

56

54

Input
Embedding

52

Inputs
(shifted right)

Figure 4

Receive set of events and corresponding set of times — 70

Embed events and embed times — 72

Form temporal encodings from embedded events and embedded times — 74

Input temporal encodings into encoder to form set of encoded representations, Z — 76

Embed time query and form query based on embedded time query and embedded events — 78

Decode encoded representations based on query — 80

Output indication of event probabilities — 82

Figure 5

Europäisches
Patentamt

European
Patent Office

Office européen
des brevets

## EUROPEAN SEARCH REPORT

Application Number

EP 21 17 4801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/160176 A1 (MEHRASA NAZANIN [CA] ET AL) 21 May 2020 (2020-05-21) * paragraph [0042] - paragraph [0183]; figures 1-7 * | 1-15 | INV. G06N3/04 G06N3/08 |
| X | SIMIAO ZUO ET AL: "Transformer Hawkes Process", ARXIV.ORG, CORNELL UNIVERSITY LIBRARY, 201 OLIN LIBRARY CORNELL UNIVERSITY ITHACA, NY 14853, 21 February 2020 (2020-02-21), XP081605093, * page 5 - page 11 * | 1-15 | ADD. G06N5/02 |
| A | Ashish Vaswani ET AL: "Attention Is All You Need", , 6 December 2017 (2017-12-06), XP055557777, Retrieved from the Internet: URL:https://arxiv.org/pdf/1706.03762.pdf [retrieved on 2019-02-15] * Sections 3 and 4 * | 1-15 | |
| A | FARNOUSH FARHADI ET AL: "Activation Adaptation in Neural Networks", ARXIV.ORG, CORNELL UNIVERSITY LIBRARY, 201 OLIN LIBRARY CORNELL UNIVERSITY ITHACA, NY 14853, 28 January 2019 (2019-01-28), XP081493530, * page 2 - page 4 * | 6,7 | TECHNICAL FIELDS SEARCHED (IPC) G06N |
| A | QIANG ZHANG ET AL: "Self-Attentive Hawkes Processes", ARXIV.ORG, CORNELL UNIVERSITY LIBRARY, 201 OLIN LIBRARY CORNELL UNIVERSITY ITHACA, NY 14853, 17 July 2019 (2019-07-17), XP081443181, * the whole document * | 1-15 | |

The present search report has been drawn up for all claims

| Place of search | Date of completion of the search | Examiner |
|---|---|---|
| The Hague | 18 October 2021 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 916 641 A1

## ANNEX TO THE EUROPEAN SEARCH REPORT
## ON EUROPEAN PATENT APPLICATION NO.

EP 21 17 4801

18-10-2021

| Patent document cited in search report | Publication date | Patent family member(s) | Publication date |
|---|---|---|---|
| US 2020160176 A1 | 21-05-2020 | CA 3061745 A1<br>US 2020160176 A1 | 16-05-2020<br>21-05-2020 |

EPO FORM P0459